# EUROPEAN PATENT APPLICATION

(11) **EP 4 565 007 A1**
(43) Date of publication of application: **04.06.2025**
(21) Application number: 23213567.3
(22) Date of filing: 01.12.2023
(51) Int. Cl.: H05B 45/10, G06V 10/74, G06V 10/82, H05B 47/125, H05B 47/19

(54) **INTELLIGENT LIGHTING CONTROL METHOD, DEVICE, COMPUTER EQUIPMENT AND STORAGE MEDIUM**

(71) Applicant: Kinglumi Co., Ltd, Guangdong 518108 (CN)
(72) Inventor: LIU, Guoliang, Shenzhen (CN); GONG, Xiaoya, Shenzhen (CN); LIU, Hongbo, Shenzhen (CN)
(74) Representative: Sun, Yiming

(57) **Abstract**

The present application disclose an intelligent lighting control method, including: acquiring a scene image with target object; processing the scene image by using a deep learning recognition model to obtain scene and object information; and matching the lighting recipe and sending it to a dimming unit to control an LED module to adjust the light. The present application, based on deep learning algorithm, adopts a recognition model trained by collecting images of lighting application scenes including target objects as deep learning datasets for deep learning training, validation and testing to process the images of the scenes, so as to obtain scene and object information and match a lighting recipe from a lighting recipe library. The powerful learning capability of deep learning is able to infer from the whole scene image to give an appropriate lighting adjustment solution, which in turn achieves the most ideal lighting adjustment needs.

## Description

### TECHNICAL FIELD

The present application relates to the field of intelligent lighting technology, and in particular, to an intelligent lighting control method, a device, a computer equipment and a storage medium.

### BACKGROUND

The lighting adjustment characteristics of LED means that the brightness, color temperature, and even color and saturation of the light emitted by LED lamps can be adjusted. At present, most of the intelligent lighting adjustment LED lamps on the market are through Bluetooth or Wi-Fi of smart speakers or smartphone Apps. A significant number of people cannot master the use of smartphone Apps and smart speakers, and for those who do not have the knowledge of optics do not understand what is the best lighting, therefore, on one hand, such intelligent lamps are not really smart, on the other hand, the lack of optical knowledge limits the use for common people. Lights that use a sensor to recognize object color and adjust the lighting automatically have already been seen online or somewhere. Although the use of the sensor to recognize the color works well for single-color objects, it has difficulties to deal with mixed color objects. Especially, the lights with color recognition algorithm do not take the background into account.

With the development of intelligent artificial, deep learning technology has made breakthroughs in various fields. How to apply deep learning technology to the lighting industry to achieve the most ideal lighting adjustment is a technical problem that needs to be solved.

### SUMMARY

An object of the present application is to overcome the defects of the prior art, and to provide an intelligent lighting control method, a device, a computer equipment, and a storage medium.

In order to achieve the above object, the present application adopts the following technical solutions:
In a first aspect, the present application provides an intelligent lighting control method, including:
acquiring a scene image with target object;
processing the scene image by using a deep learning recognition model to obtain scene and object information and matching a lighting recipe from a lighting recipe library; and
sending the lighting recipe to a dimming unit to control an LED module to adjust the light.

Further, the deep learning recognition model is trained by collecting images of lighting application scenes with target objects as deep learning datasets for deep learning training, validation and testing. For each image, optics engineers give a lighting recipe as the image label and add it to the lighting recipe library.

Further, the step of the deep learning recognition model being trained by collecting images of lighting application scenes with target objects as deep learning datasets for deep learning training, validation and testing includes:
acquiring images of lighting application scenes with target objects as datasets;
processing the datasets to obtain deep learning datasets; and
establishing a deep learning model, training, validating and testing the deep learning model by using the deep learning datasets to obtain a deep learning recognition model.

Further, the step of acquiring images of lighting application scenes with target objects as datasets includes:
acquiring images of the lighting application scenes with target objects as datasets via a camera integrated on lamps. Optics engineers give each image a lighting recipe as the image label and add it to a lighting recipe library.

Further, the step of processing the datasets to obtain deep learning datasets includes:
classifying and labeling the images of the datasets, and dividing the images of the datasets into a training dataset, a validation dataset, and a testing dataset in a ratio of 6:2:2; and
taking the training dataset, the validation dataset, and the testing dataset as the deep learning datasets.

Further, the step of establishing a deep learning model, training, validating and testing the deep learning model by using the deep learning datasets to obtain a deep learning recognition model includes:
training the deep learning model by using the training dataset;
validating the deep learning model by using the validation dataset; and
testing the deep learning model by using the testing dataset to obtain a deep learning recognition model.

Usually, the training, validation and testing part of the recognition model is performed on a server or workstation. The trained model is ported onto the light, and only the inferring part is performed on the light.

Further, the step of processing the scene image by using a deep learning recognition model to obtain scene and object information includes:
performing inference from the scene image by using the trained deep learning recognition model to obtain scene and object information.

In a second aspect, the present application provides an intelligent lighting controller, including:
an acquisition unit, configured to acquire a scene image with target object;
an inferring unit, configured to process the scene image by using a deep learning recognition model to obtain scene and object information, and match a lighting recipe from a lighting recipe library;
a dimming unit, configured to control an LED module to adjust the lighting according to the lighting recipe.

In a third aspect, the present application provides a computer equipment, including a memory and a processor connected to the memory, wherein the memory is configured to load in a computer program, and the processor is configured to run the computer program to perform the steps in the above-mentioned method.

In a fourth aspect, the present application provides a computer-readable storage medium, wherein the storage medium stores a computer program and device setup data, and the computer program, when executed by a processor, implements the steps in the above-mentioned method.

Compared with the prior art, the beneficial effects of the present application are as follows: the present application, based on deep learning technology, adopts a recognition model trained with deep learning datasets for training, validation and testing to process the images of the scene with the target object, so as to obtain scene and object information. The powerful learning capability of deep learning is able to analyze the image of whole scene to give an appropriate lighting adjustment solution, which in turn achieves the most ideal lighting adjustment needs.

### BRIEF DESCRIPTION OF THE DRAWINGS

To describe the technical solutions in the embodiments of the present application more clearly, the following briefly introduces the accompanying drawings required for describing the embodiments. Apparently, the accompanying drawings in the following description show only some embodiments of the present application, and a person of ordinary skill in the art may still derive other drawings from these accompanying drawings without creative efforts.
FIG. 1 is a schematic diagram of an intelligent lighting control device according to an embodiment of the present application;
FIG. 2 is a schematic flowchart of recognition model inferring of the intelligent lighting control method according to an embodiment of the present application;
FIG. 3 is a schematic flowchart of recognition model training of the intelligent lighting control method according to an embodiment of the present application;
FIG. 4 is another schematic sub-flowchart of recognition model training of the intelligent lighting control method according to an embodiment of the present application;
FIG. 5 is a schematic block diagram of an intelligent lighting controller according to an embodiment of the present application;
FIG. 6 shows a schematic block diagram of deep learning algorithm according to an embodiment of the present application;
FIG. 7 is a schematic block diagram of datasets preparation of the intelligent lighting control method according to an embodiment of the present application;
FIG. 8 shows a schematic block diagram of datasets processing of the intelligent lighting control method provided by an embodiment of the present application;
FIG. 9 is a schematic block diagram of a deep learning model training of the intelligent lighting controller according to an embodiment of the present application; and
FIG. 10 is a schematic block diagram of a computer equipment according to an embodiment of the present application.

### DETAILED DESCRIPTION

The following clearly and completely describes the technical solutions in the embodiments of the present application with reference to the accompanying drawings in the embodiments of the present application. Apparently, the described embodiments are some of the embodiments of the present application rather than all the embodiments. Based on the embodiments of the present application, all other embodiments obtained by a person of ordinary skill in the art without creative efforts shall fall within the protection scope of the present application.

It should be understood that when used in this specification and the appended claims, the term "comprise" and "include" indicate the presence of described features, wholes, steps, operations, elements and/or components, but do not exclude the presence or addition of one or more other features, wholes, steps, operations, elements, components and/or a set thereof.

It should be understood that the terms used in the specification of the present application are merely used for describing specific embodiments, and are not intended to limit the present application. As used in the description of the present application and the appended claims, singular forms, "a" or "an" and "the", are intended to include plural forms, unless the context clearly indicates otherwise.

It should be further understood that a term "and/or" used in this specification of the present application and the appended claims refers to one or more of any and all possible combinations of the associated items that is listed and includes the combinations.

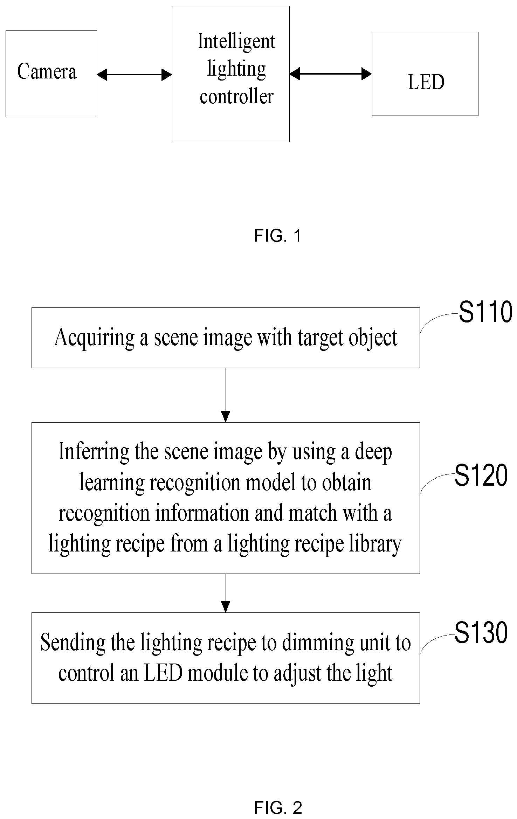

Referring to FIG. 1 and FIG. 2, FIG. 1 is a schematic diagram of an application scene of an intelligent lighting control device according to an embodiment of the present application. FIG. 2 is a schematic flowchart of recognition model inferring of the intelligent lighting control method according to an embodiment of the present application. The intelligent lighting control method of the present application is applied in an intelligent lighting controller, which interacts with a camera device and an LED module, the intelligent lighting controller acquires the scene image output by the camera unit and processes the scene image, finally outputs scene and object information, and transmits the lighting recipe to the dimming unit to make a corresponding response.

FIG. 2 is a schematic flowchart of recognition model inferring of the intelligent lighting control method according to an embodiment of the present application. As shown in FIG. 2, the method includes the following steps S110 to S130.

S110: acquiring a scene image with target object.

In this embodiment, in order to achieve a better recognition effect, for both of inferring and training, acquiring the scene image are carried out by using the same camera to take images under white light at the same color temperature and spectrum, so as to obtain the optimal scene image.

S120: inferring from the scene image by using a deep learning recognition model to obtain scene and object information and matching a lighting recipe from a lighting recipe library.

In this embodiment, the trained deep learning recognition model is used to infer the scene and object information from the entire scene image and match the most suitable lighting parameters of the scene.

In an embodiment, step S120 includes the following step:
performing inference from the scene image by using the trained deep learning recognition model to obtain scene and object information.

In this embodiment, the trained deep learning recognition model is adopted to infer the scene and object information from the entire image, and then match a lighting recipe from the lighting recipe library, so as to achieve the best lighting effect.

S130: sending the lighting recipe to a dimming unit to control an LED module to adjust the lighting.

In this embodiment, the lighting recipe containing the most suitable lighting parameters for the scene is sent to the dimming unit, so as to cause the dimming unit to control the LED modules with different wavelengths to achieve the best lighting effect.

In an embodiment, the deep learning recognition model is trained by collecting images of the lighting application scene as deep learning datasets for deep learning training, validation and testing.

In this embodiment, the powerful learning capability of deep learning is used for the learning of the application scenes with relatively good results, so that the recognition model can infer from the whole scene, and then give a suitable lighting adjustment solution.

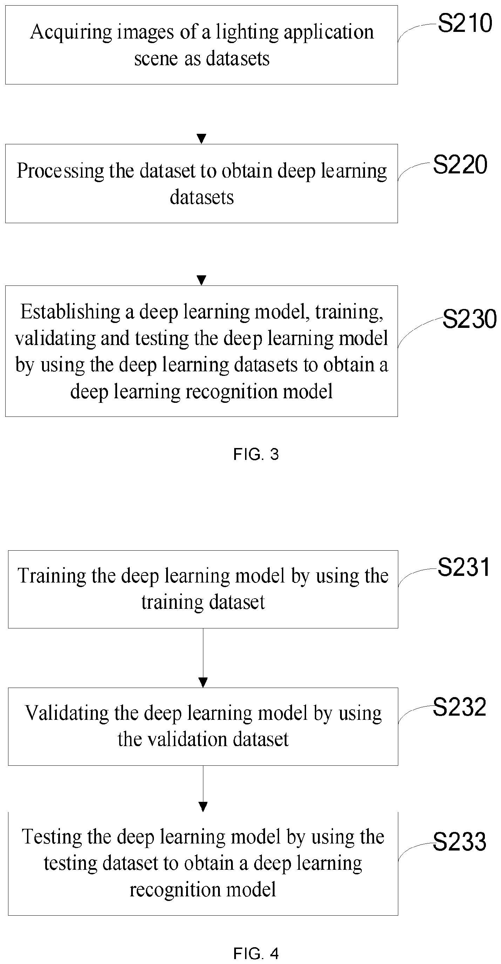

In an embodiment, as shown in FIG. 3, the step of the deep learning recognition model being trained by collecting images of lighting application scenes as deep learning datasets for deep learning training, validation and testing includes the steps S210 to S230:
S210: acquiring images of lighting application scenes as datasets.

In this embodiment, images of lighting application scenes containing target objects are acquired, and images of the lighting application scenes under white light with a specific color temperature and a specific spectrum are acquired as datasets. Specifically, white light close to a D65 standard light source is generally used.

In an embodiment, step S210 includes the following step:
acquiring images of the lighting application scenes as datasets via a camera integrated on the lamp.

S220: processing the datasets to obtain deep learning datasets.

In an embodiment, step S220 includes the following steps:
classifying and labeling the images of the datasets, and dividing the images of the datasets into a training dataset, a validation dataset, and a testing dataset in a ratio of 6:2:2; and
taking the training dataset, the validation dataset, and the testing dataset as the deep learning datasets.

In this embodiment, each image is first classified to determine a lighting recipe, and the image is labeled with the lighting recipe. Experimental validation is performed if necessary, and the validated lighting recipe is used as the label data for the images.

S230: establishing a deep learning model, training, validating, and testing the deep learning model by using the deep learning datasets to obtain a deep learning recognition model.

In an embodiment, as shown in FIG. 4, step S230 includes the following steps S231-S233:
S231, training the deep learning model by using the training dataset.
S232, validating the deep learning model by using the validation dataset.
S233, testing the deep learning model by using the testing dataset to obtain a deep learning recognition model.

In this embodiment, the deep learning model is trained by using the training dataset, the hyperparameters of the deep learning model are adjusted by using the validation dataset, and the performance of the deep learning model is evaluated by using the testing dataset.

Steps S231, S232, and S233 are performed on a workstation or server with a general-purpose GPU.

In an embodiment, all lamps within the lighting area are controlled via Bluetooth Mesh network, and in order to ensure accurate scene recognition, when performing scene recognition, all lamps can be controlled via network to illuminate the white light with the same color temperature and spectrum as that used in acquiring the image of the datasets to obtain a scene image, thereby obtaining the most accurate description of the scene.

In an embodiment, each lamp includes LED modules with different spectra such as cool white, warm white, red, green, blue, and amber, etc., and LED modules with different spectra can be controlled to emit near full-spectral light according to a lighting recipe matched by the scene and object information inferred from the image of scene with the recognition model, so that any desired lighting effect can be achieved.

In an embodiment, considering the different subjective feelings of different users towards the lighting, the user can manually adjust the lighting of the lamps using a smartphone APP via a Bluetooth or WiFi communication module, so as to meet the subjective requirements of different users towards the lighting effect.

In an embodiment, during the operation of the lighting system, the deep learning training dataset, validation dataset, and testing dataset can be continuously enriched by collecting more scene images to optimize the recognition model, and the recognition model is upgraded by FOTA.

According to the above-described intelligent lighting control method, an image of the scene with target object is processed by inferring with a recognition model to obtain scene and object information. Matching the scene and object information with a lighting recipe containing the most suitable lighting parameters for the scene, and send the lighting recipe to a dimming unit, so as to cause the dimming unit to control the lighting emitted by the LED modules with different wavelengths to achieve the best lighting effect.

In an embodiment, the implementation process of the intelligent lighting control method applied to clothing lighting is as follows:
A RGB camera with one million pixels is selected, and a processor with CPU, ISP and NPU unit is selected, LED modules of WW (white light warm), CW (white light cool), R (red), G (green), B (blue), AM (amber), which can output full spectrum of light for a specific lighting recipe after combination, are selected, and a 9 in 1 optical lens with a 20 degree beam angle is selected for the lamp.

By adjusting the light emitted by the combination of 6 LED modules of the lamps, the lamp is set to emit 6500K white light, with a spectrum that approximates the D65 standard light source, as the garments illuminated by this light source almost show their real colors. The camera on the lamp captures images of the scenes with the garments as deep learning datasets, and the optical engineer instructs the data engineer to classify the image data and label them with the corresponding lighting recipe, which serves as the training dataset, validation dataset and testing dataset for deep learning model training.

The labelled deep learning datasets is divided into training dataset, validation dataset and testing dataset in a ratio of 6:2:2.

A deep learning model is established by using a deep learning framework and is trained, validated, and tested. The deep learning model trained by using the training dataset, the hyper-parameters of the model is adjusted by using the validation dataset, and the performance of the trained model is evaluated by using the testing dataset.

The tested deep learning model is ported to an intelligent lighting control on the lamp. The camera, the acquisition unit, the inferring unit, the dimming unit, and the LED module form a working closed loop.

In this embodiment, the designed lamp needs to be set to emit white light with spectra close to daylight at 6500K for one second when starting up, as well as when detecting garments change, so that the camera can the most realistically capture the images of the scenes, which are used to infer out the lighting recipe for the scene to control the lamp to adjust the lighting. In order to better control the lighting of the whole space with many lamps, the lamps are controlled over Bluetooth Mesh network. Considering the different subjective feelings for different users about the best lighting effect, the user can manually adjust the lighting of the lamps using a smartphone APP via a Bluetooth or WiFi communication module, so as to meet the subjective requirements of different users about the best lighting effect. During the operation of the lighting system, the deep learning training dataset, validation dataset, and testing dataset are continuously enriched by collecting more scene images to optimize the recognition model, and the recognition model is upgraded by FOTA.

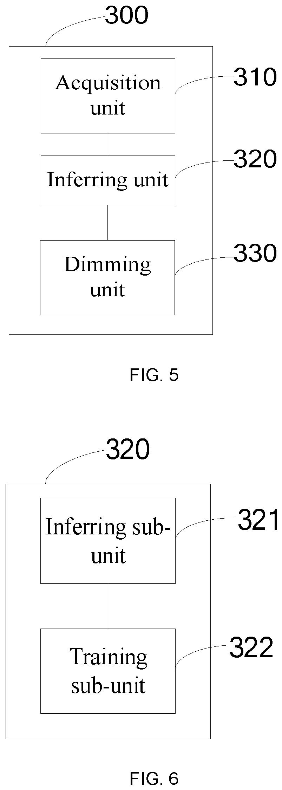

FIG. 5 is a schematic block diagram of an intelligent lighting controller according to an embodiment of the present application. As shown in FIG. 5, corresponding to the above-mentioned intelligent lighting control method described above, an intelligent lighting controller 300 is further provided. The intelligent lighting controller 300 includes units configured to perform the above intelligent lighting control method and the controller is configured to an embedded computer with AI processor. Specifically, referring to FIG. 5, the intelligent lighting controller 300 includes an acquisition unit 310, an inferring unit 320, and a dimming unit 330.

The acquisition unit 310 is configured to acquire images of scenes.

In this embodiment, both acquiring the images of scenes for inferring on the lamp and collecting the images as deep learning datasets on the server are carried out by using the same camera to take images under white light at the same color temperature and spectrum, so as to obtain the optimal recognition model.

The inferring unit 320 is configured to process the scene image on the lamp by using a deep learning recognition model to obtain scene and object information.

In this embodiment, the deep learning recognition model is used to process the entire scene image to obtain scene and object information, and match a lighting recipe containing the most suitable lighting parameters of the scene.

In an embodiment, as shown in FIG. 6, the inferring unit 320 includes an inferring sub-unit 321.

The inferring sub-unit 321 is configured to perform an inference from the scene image by using a deep learning recognition model to obtain scene and object information.

In this embodiment, the deep learning recognition model is adopted to infer from the entire scene image, and the obtained scene and object information and match a lighting recipe that contains the most suitable lighting parameters of the scene, so as to achieve the best lighting effect.

The dimming unit 330 is configured to receive the lighting recipe to control an LED module to adjust the light.

In this embodiment, the lighting recipe containing the most suitable lighting parameters for the scene is sent to the dimming unit, so as to cause the dimming unit to control the LED modules with different wavelengths to emit the best lighting.

In an embodiment, as shown in FIG. 6, the inferring unit 320 further includes a training sub-unit 322.

The training sub-unit 322 is configured to obtain a deep learning recognition model by collecting images of the lighting application scenes as deep learning datasets for deep learning training, validation and testing.

In this embodiment, the powerful learning capability of deep learning is used for the learning of the lighting scenes with relatively good results, so that the recognition model can infer the scene and object information from the image of the whole scene, and then give a suitable lighting adjustment solution.

In an embodiment, the training sub-unit 322 includes an acquisition module 3221, a data processing module 3222 and a learning module 3223.

The acquisition module 3221 is configured to acquire images of lighting application scenes as datasets.

In this embodiment, images of lighting application scenes containing target objects are acquired, and images of the lighting application scenes under white light with a specific color temperature and a spectrum emitted from a preset lamp are acquired as datasets. Specifically, white light close to a D65 standard light source is generally used.

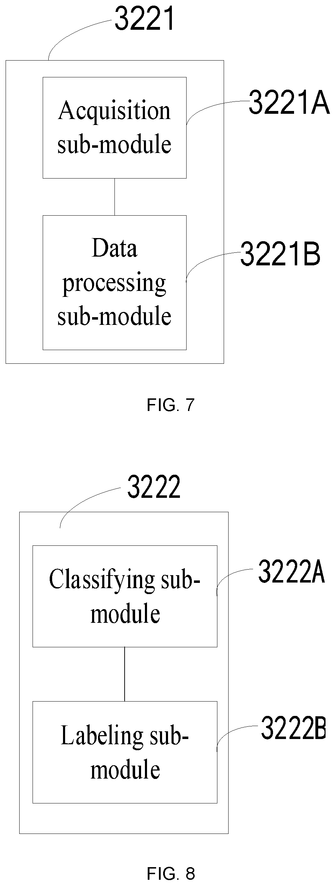

In an embodiment, as shown in FIG. 7, the acquisition module 3221 includes acquisition sub-module 3221A and a data processing sub-module 3221B.

The acquisition sub-module 3221A is configured to acquire images of the lighting application scenes as datasets via a camera integrated on the lamp. The images of the lighting application scenes can be quickly captured by the camera on the lamp.

The data processing sub-module 3221B is configured to process the datasets to obtain a deep learning datasets.

In an embodiment, as shown in FIG. 8, the data processing module 3222 includes a classifying sub-module 3222A and a labeling sub-module 3222B.

The classifying and labeling sub-module 3222A is configured to classify the images of the datasets, and dividing the images of the datasets into a training dataset, a validation dataset, and a testing dataset in a ratio of 6:2:2.

The labeling sub-module 3222B is configured to label the images of the datasets.

In this embodiment, each image of scenes is first determined that what kind of lighting recipe is required for the image of scenes, and the image is labeled by using the lighting recipe. Experimental validation is performed if necessary, and the validated lighting recipe is used as the label data for the model training.

The learning module 3223 is configured to establish a deep learning model, training, validating, and testing the deep learning model by using the deep learning datasets to obtain a deep learning recognition model.

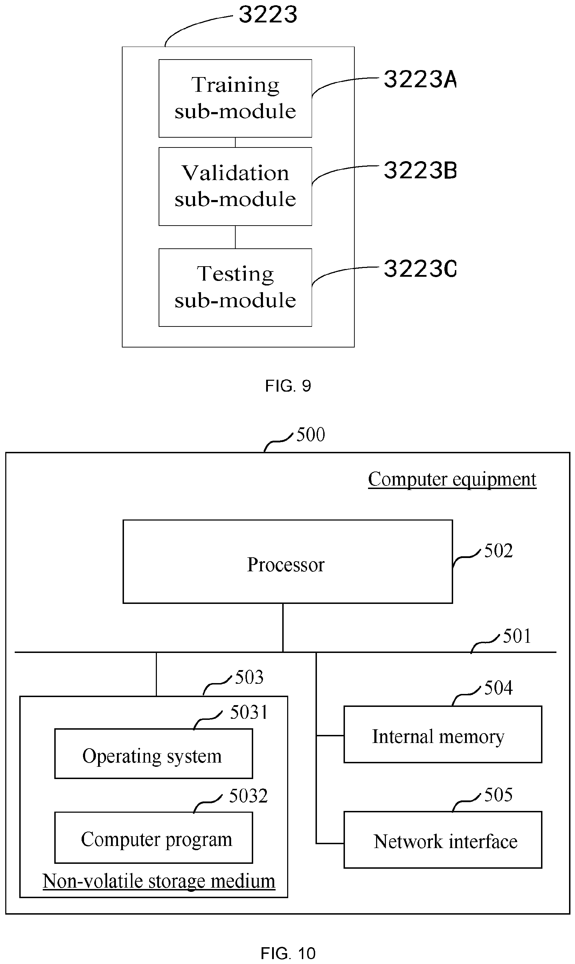

In an embodiment, as shown in FIG. 9, the learning module 3223 includes a training sub-module 3223A, a validation sub-module 3223B and a testing sub-module 3223C.

The training sub-module 3223A is configured to train the deep learning model by using the training dataset.

The validation sub-module 3223B is configured to validate the deep learning model by using the validation dataset.

The testing sub-module 3223C is configured to test the deep learning model by using the testing dataset to obtain a deep learning recognition mode.

In this embodiment, the deep learning model is trained by using the training dataset, the hyperparameters of the deep learning model are adjusted by using the validation dataset, and the performance of the deep learning model is evaluated by using the testing dataset. When the deep learning recognition model is doing the inference, the camera and the color temperature and spectrum of white light used by the lamp are the same as that used for acquiring the images of the datasets, so as to better reproduce the true appearance of the scene.

It should be noted that, a person skilled in the art may clearly understand that, for specific implementation processes of the intelligent lighting controller and the units, reference may be made to the corresponding descriptions in the respective corresponding method embodiments in the foregoing embodiments. For convenience and brevity of description, details are not described herein again.

Referring to FIG. 10, FIG. 10 is a schematic block diagram of a computer equipment according to an embodiment of this application. The computer equipment 500 may be a terminal device or a server, or may be a component or a member in another device.

Referring to FIG. 10, the computer equipment 500 includes a processor 502, a memory, and a network interface 505 connected through a system bus 501. The memory may include a non-volatile storage medium 503 and an internal memory 504, or the memory may be a volatile computer-readable storage medium.

The non-volatile storage medium 503 may store an operating system 5031 and a computer program 5032. The computer program 5032, when executed, can cause the processor 502 to perform the intelligent lighting control method.

The processor 502 is configured to provide computing and control capabilities, to support running of the entire computer equipment 500.

The internal memory 504 provides an environment for the running of the computer program 5032 in the non-volatile storage medium 503. The computer program 5032, when executed by the processor 502, may cause the processor 502 to perform the intelligent lighting control method.

The network interface 505 is configured to perform network communication with another device. A person skilled in the art may understand that, the structure shown in FIG. 10 is merely a block diagram of a structure of a part related to a solution of this application, and does not constitute any limitation on the computer equipment 500 to which the solution of this application is applied. A specific computer equipment 500 may include more or fewer components than those shown in the figure, or some components may be combined, or a different component deployment may be used. For example, in some embodiments, the computer equipment may include only a memory and a processor. In such an embodiment, structures and functions of the memory and the processor are the same as those in the embodiment shown in FIG. 10, and details are not described herein again.

In one embodiment, the processor 502 is configured to run the computer program 5032 stored in the memory to implement the intelligent lighting control method.

It should be understood that, in this embodiment of this application, the processor 502 may be a central processing unit (CPU), or the processor 502 may be another general-purpose processor, digital signal processor (DSP), application-specific integrated circuits (ASIC), or field programmable gate array (FPGA), or another programmable logic device, discrete gate or transistor logic device, a discrete hardware component, or the like. The general-purpose processor may be a microprocessor, or any conventional processor, or the like.

A person of ordinary skill in the art can understand that all or part of the processes in the methods of the above embodiments may be implemented by a computer program, and the computer program may be stored in a computer-readable storage medium. The computer program is executed by at least one processor in a computer system to implement the steps of the processes in the above method embodiments.

Therefore, this application further provides a computer-readable storage medium.

The storage medium is a physical, non-transitory storage medium, such as a USB flash drive, a removable hard disk, a read-only memory (ROM), a magnetic disk, an optical disc, or various physical storage mediums that can store computer programs.

A person of ordinary skill in the art may be aware that, in combination with the examples described in the embodiments disclosed in this specification, units and algorithm steps can be implemented by electronic hardware, computer software, or a combination of the two. To clearly describe the interchangeability between the hardware and the software, compositions and steps of each example have been generally described in the foregoing specification based on functions. Whether the functions are performed by hardware or software depends on particular applications and design constraint conditions of the technical solutions. A person skilled in the art can use different methods to implement the described functions for each particular application, but it should not be considered that the implementation goes beyond the scope of this application.

In the several embodiments provided in this application, it should be understood that the disclosed apparatus and method may be implemented in other manners. For example, the apparatus embodiments described above are illustrative only. For example, the division of the units is merely a logical function division. In an actual implementation, there may be another division manner. For example, a plurality of units or components may be combined or integrated into another system, or some features may be ignored or may not be performed.

The steps in the methods of the embodiments of this application may be rearranged, combined, and deleted according to actual needs. The units in the apparatuses of the embodiments of this application may be combined, divided, and deleted according to actual needs. In addition, functional units in the embodiments of this application may be integrated into one processing unit, or each of the units may exist alone physically, or two or more units may be integrated into one unit.

When the integrated unit is implemented in the form of a software functional unit and sold or used as an independent product, the integrated unit may be stored in a storage medium. Based on such an understanding, the technical solutions of this application essentially, or the part contributing to the related art, or some of the technical solutions may be implemented in a form of a software product. The computer software product is stored in a storage medium, and includes a plurality of instructions for instructing an electronic device (which may be a personal computer, a terminal, a network device, or the like) to perform all or some of the steps of the methods described in the embodiments of this application.

## Claims

1. An intelligent lighting control method, comprising:
acquiring a scene image with target object;
processing the scene image by using a deep learning recognition model to obtain scene and object information and matching a lighting recipe from a lighting recipe library; and
sending the lighting recipe to a dimming unit to control an LED module to adjust the light.

2. The method according to claim 1, wherein the deep learning recognition model is trained by collecting images of lighting application scenes as deep learning datasets for deep learning training, validation and testing.

3. The method according to claim 2, wherein the step of the deep learning recognition model being trained by collecting images of lighting application scenes as deep learning datasets for deep learning training, validation and testing comprises:
acquiring images of lighting application scenes as datasets;
processing the datasets to obtain deep learning datasets; and
establishing a deep learning model, training, validating and testing the deep learning model by using the deep learning datasets to obtain a deep learning recognition model.

4. The method according to claim 3, wherein the step of acquiring images of lighting application scenes as datasets comprises:
acquiring images of the lighting application scenes as datasets via a camera integrated on a lamp.

5. The method according to claim 3, wherein the step of processing the datasets to obtain deep learning datasets comprises:
classifying and labeling the images of the datasets, and dividing the images of the datasets into a training dataset, a validation dataset, and a testing dataset in a ratio of 6:2:2; and
taking the training dataset, the validation dataset, and the testing dataset as the deep learning datasets.

6. The method according to claim 3, wherein the step of establishing a deep learning model, training, validating and testing the deep learning model by using the deep learning datasets to obtain a deep learning recognition model comprises:
training the deep learning model by using the training dataset;
validating the deep learning model by using the validation dataset; and
testing the deep learning model by using the testing dataset to obtain a deep learning recognition model.

7. The method according to claim 1, wherein the step of processing the scene image by using a deep learning recognition model to obtain scene and object information comprises:
performing inference from the scene image by using the deep learning recognition model to obtain scene and object information.

8. An intelligent lighting controller, comprising:
an acquisition unit, configured to acquire a scene image with target object;
an inferring unit, configured to process the scene image by using a deep learning recognition model to obtain scene and object information, and match a lighting recipe from a lighting recipe library; and
a dimming unit, configured to control an LED module to adjust the light according to the lighting recipe.

9. A computer equipment, comprising a memory and a processor connected to the memory, wherein the memory is configured to store a computer program, and the processor is configured to run the computer program to perform the steps in the method according to any one of claims 1-7.

10. A computer-readable storage medium, wherein the storage medium stores a computer program, and the computer program, when executed by a processor, implements the steps in the method according to any one of claims 1-7.
